Europäisches Patentamt

European Patent Office

Office européen des brevets

(11) Publication number: **0 242 003**
**A2**

# EUROPEAN PATENT APPLICATION

(21) Application number: **87200695.2**

(22) Date of filing: **14.04.87**

(51) Int. Cl.⁴: **G 06 F 15/00**

(30) Priority: **15.04.86 US 852068**

(43) Date of publication of application: **21.10.87**
**Bulletin 87/43**

(84) Designated Contracting States: **AT BE CH DE ES FR GB GR IT LI LU NL SE**

(71) Applicant: **Symbolics, Inc., 11 Cambridge Center, Cambridge Massachusetts 02142 (US)**

(72) Inventor: **Edwards, Bruce E., 19 Broad Street, Belmont Massachusetts 02178 (US)**
Inventor: **Lebel, Ronald J., 1053 Point View Street, Los Angeles California 90035 (US)**

(74) Representative: **Smulders, Theodorus A.H.J. et al, Vereenigde Octrooibureaux Nieuwe Parklaan 107, NL-2587 BP 's-Gravenhage (NL)**

(54) **Processor internal bus control.**

(57) In a symbolic processing system having a micropro-grammable processor, the processor includes a plurality of gate arrays implementing a date path circuit and sources and destinations for data from the data path circuit. The gate arrays are connected by an internal bus and the internal bus is utilized as a first bus during a first portion of a clock cycle to enable the data path circuit to receive data from one of different sources and utilizing internal bus as a second bus during a second nonoverlapping portion of the clock cycle to apply the result of an operation to one of different destinations in the processor. In this way a single bus is time multiplexed.

TITLE: PROCESSOR INTERNAL BUS CONTROL

BACKGROUND OF THE INVENTION

The present invention relates to a symbolic processing system and in particular to an internal bus control for a microprogrammable processor.

A symbolic processing system of the type to which the present invention relates is disclosed in copending U.S. application 450,600 filed December 17, 1982 and now pending. That system includes a microprogrammable processor connected to main memory and other system components such as an I/O controller over an external bus called LBUS.

In this system, macroinstructions stored in main memory are transferred over the LBUS to the process which has a microinstruction memory therein so that at least one microinstruction is used for each macroinstruction in order to carry out compiled functions.

The processor is made up of several different sections including a data path circuit which includes an arithmetic logic unit or ALU which receives data from various sources in the processor on a first bus called ABUS and drives the results of the operation over another bus call OBUS to one of various destinations in the processor.

The various sources and destinations in the processor include an instruction prefetch unit or IPU which prefetches a batch of macroinstructions from the main memory in order to save time during processing, a memory mapping unit and map memory which enables the system to use a virtual memory addressing scheme and which enables the processor address main memory by using virtual memory addresses, a first physical memory (AMEM) and a memory address unit (AMEMA) which is used to store data for the data path circuit, and a second memory (BMEM) and the memory address circuitry (BMEMA) which is used for the storing of contents and as a temporary register storage for the data path circuit..

In the prior art system, in order to transfer data from one of the different sources in the processor to the data path circuit and to drive data from the data path circuit to any one of various destinations, two separate and ·distinct buses were utilized.

While the system effectively carried out the transferring of data on the two buses, this dual bus system was found to be a disadvantage when the processor elements such as the data path circuit, the IPU, the map controller, the AMEMA and BMEMA circuits were implemented as gate arrays which had limited numbers of pins available for interconnection.

## SUMMARY OF THE INVENTION

The main object of the present invention is to provide an internal bus and control therefore in order to reduce the number of pins for the transfer of data among the various gate arrays of the processor.

These and other objects and advantages of the present invention are obtained in accordance with method and system of the present invention wherein: an internal gate array bus (GBUS) is provided for data communication among the gate arrays for carrying out the data communication in clock cycles and control means are provided for utilizing the internal bus as the first bus (ABUS) during a first portion of a clock cycle and utilizing the internal bus as the second bus (OBUS) during a second nonoverlapping portion of the clock cycle to time multiplex the first and second buses on the internal GBUS.

In another feature of the present invention, means receptive of portion of the data communicated on the internal bus are used for selecting one source and one destination during the first and second portions of the clock cycles.

These and other features and advantages of the present invention will be described in more detail in the following description and with reference to the attached drawing wherein:

BRIEF DESCRIPTION OF THE DRAWINGS

Figure 1 is a block diagram of the basic symbolic processing system according to the present invention;

Figure 2 is a detailed block diagram of the processor shown in Fig. 1 and according to the present invention; and

Figure 3 is a timing diagram of the bus multiplexing in accordance with the present invention.

DETAILED DESCRIPTION OF THE INVENTION

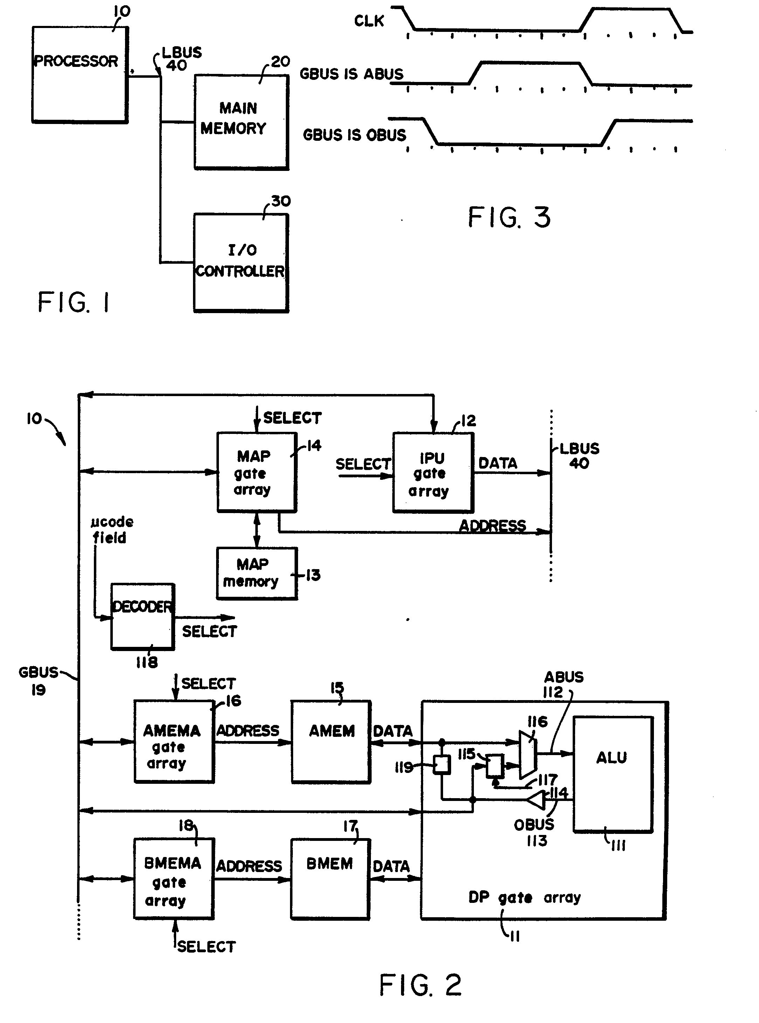

Figure 1 shows the basic system of the present invention including a processor 10 connected to LBUS 40 so as to interconnect the processor with main memory 20 and I/O controller 30.

The processor 10 is a microprogrammed processor which operates under the control of a main clock having a preselected clock cycle.

Figure 2 shows some of the main elements of the processor 10 including a data path circuit implemented on a data path gate array 11, an instruction prefetch unit (IPU) implemented on a gate array 12, a map memory 13 and a map controller gate array 14, a first physical memory AMEM 15 and the AMEM address gate array (AMEMA) 16, a second physical memory BMEM 17 and the BMEM address gate array BMEMA 18.

All of the gate arrays 11, 12, 14, 16 and 18 are connected internally by GBUS 19 which is connected to the gate arrays.

The data path gate array circuit 11 includes an arithmetic logic unit or ALU 111 which receives data from different sources including AMEM 15 as well as the other gate arrays 12 and 14 over a line labeled ABUS 112. Conversely, after the ALU 111 has performed an operation on the date, it drives the result of that operation on a line labeled OBUS 113 to various destinations including gate arrays 12, 14 and 16.

This is carried out by multiplexing the GBUS 19 during a clock cycle in order to make GBUS 19 act as ABUS 112, during one portion of the clock cycle and act as OBUS 113 during another portion of the clock cycle which is nonoverlapping with the first portion. In order to carry this out, two signals, GBUS is ABUS and GBUS is OBUS shown in Fig. 3 are generated by the clock circuitry. During the signal GBUS is ABUS, data from one of different sources is fed to the ALU over a line 112. For data coming from registers which must be stable during the signal GBUS is ABUS, a latch 115 is provided which has the signal BUS is ABUS fed to the latch input line 117 so that data is held in the latch during the entire GBUS is ABUS signal as can be seen in Fig. 3. The output of latch 115 and the data line from AMEM 15 is fed to a selector circuit 16 which feeds the data to the ALU 111.

In the opposite direction, driver 114, drives the data from ALU 111 during the GBUS is OBUS time period, enabling the data from this source to be fed to any one of the different destinations including a register 119 to write AMEM 15 in the next cycle as well as any of the gate arrays attached to GBUS 19.

The present invention also utilizes decoder 118 to determine which of the gate arrays is to be selected as the source of data and which is to be selected as the destination of data during the two periods of the clock cycle. Microcode fields source this decoder.

It will be appreciated that the instant specification and claims are set forth by way of illustration and not limitation, and that various modifications and changes may be made without departing from the spirit and scope of the present invention.

**0 242 003**

WHAT IS CLAIMED IS:

1.    In a symbolic processing system having a microprogrammable processor including a data path circuit for receiving data from one of different sources in the processor on a first bus and for applying the result of an operation thereon on a second bus to one of different destinations in the processor, the improvement wherein the processor includes a plurality of gate arrays for implementing the data path circuit and the source and destinations, an internal bus for data communication among the gate arrays in clock cycles and control means for utilizing the internal bus as the first bus during a first portion of a clock cycle and utilizing the internal bus as the second bus during a second non-overlapping portion of the clock cycle to time multiplex the first and second buses on the internal bus.

2.    The system according to claim 1, further comprising means receptive of a portion of the microcode word for selecting one source and one destination during the first and second portions of the clock cycles.

3.    In a method for symbolic processing wherein a microprogrammable processor carries out operations on data in a data path circuit which receives data from one of different sources in the processor on a first bus and applies the results of an operation on a second bus to one of different destinations in the processor, the improvement comprising: providing a plurality of gate arrays for implementing the data path circuit and the processor sources and destinations, providing an internal processor bus connected to the gate arrays; and transferring data between the gate arrays on an internal bus in clock cycles by utilizing the internal bus as the first bus during a first portion of a clock cycle and utilizing the internal bus as the second bus during a second non-overlapping portion of the clock cycle to time multiplex the first and second buses on the internal bus.

4. The method according to claim 3, further comprising selecting one source and one destination during each clock cycle portion by using a portion of the microinstruction word.

0 242 003

FIG. 1

FIG. 3

FIG. 2